(19) Europäisches Patentamt
European Patent Office
Office européen des brevets

(11) **EP 3 094 933 B1**

(12) **EUROPEAN PATENT SPECIFICATION**

(45) Date of publication and mention
of the grant of the patent:
**11.03.2020   Bulletin 2020/11**

(21) Application number: **15701898.7**

(22) Date of filing: **13.01.2015**

(51) Int Cl.:
*F25D 3/11* *(2006.01)*

(86) International application number:
**PCT/US2015/011207**

(87) International publication number:
**WO 2015/108867 (23.07.2015 Gazette 2015/29)**

(54) **APPARATUS AND METHOD FOR CHILLING OR FREEZING**

VORRICHTUNG UND VERFAHREN ZUM KÜHLEN ODER EINFRIEREN

APPAREIL ET PROCÉDÉ DE RÉFRIGÉRATION OU DE CONGÉLATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2014   US 201461928195 P**

(43) Date of publication of application:
**23.11.2016   Bulletin 2016/47**

(73) Proprietor: **Praxair Technology, Inc.**
**Danbury, CT 06810 (US)**

(72) Inventors:
• **LANG, Gary, D.**
**Naperville, IL 06564 (US)**
• **GIRARD, John, M.**
**Downers Grove, IL 06515 (US)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**JP-A- S5 875 681**   **US-A- 4 350 027**
**US-A- 5 444 985**   **US-A- 5 715 688**

## Description

### Field of the Invention

This invention relates to chilling and freezing of products such as articles of food, in an apparatus through which the products pass while they are exposed to an atmosphere that chills or freezes the products.

### Background of the Invention

In the field of chilling and freezing products such as articles of food, one well-known technique is to pass the products through a tunnel-like apparatus within which the products are exposed to a very cold atmosphere which causes the products to be chilled, or partially or completely frozen, depending on the temperature of the products entering the apparatus, the temperature within the apparatus, the length of time that the product is inside the apparatus, and the quality of the contact between the products and the cold atmosphere.

Creating the cold atmosphere within the apparatus involves using cryogenic materials, such as liquid nitrogen or liquid or solid carbon dioxide, and which in turn involves the costs associated with the cryogenic materials and the costs such as energy associated with bringing them to the desired low temperature. Thus, there is an ongoing desire to improve the efficiency of apparatus and methods for chilling and freezing, in terms of the extent of chilling and freezing attained per unit of cryogen and/or per unit of energy expended in the operation. The present invention provides a significant improvement in such efficiency.

In JP-S58 75681 A there is disclosed an apparatus useful for chilling or freezing a product, comprising: an elongated enclosure having an entrance and an exit. A movable belt can carry product to be chilled or frozen on the top surface of the belt within the enclosure between the entrance and the exit, wherein the belt comprises an upper run and a return run below the upper run. The enclosure includes a first section which extends from the entrance in a generally downward sloping path, and a second section which extends in a generally upward sloping path to the exit,.

Further apparatuses useful for chilling or freezing of food products are disclosed in US 4 350 027 A and US 5 715 688 A.

### Brief Summary of the Invention

The present invention is an apparatus useful for chilling or freezing a product as it is defined in claim 1.

Preferred embodiments of the apparatus are defined in the dependent claims.

Another aspect of the present invention is a method of chilling or freezing a product as it is defined in claim 4.

### Brief Description of the Drawings

Figure 1 is a perspective view of the exterior of an apparatus according to an embodiment of the present invention.
Figure 2 is a cross-sectional view of the embodiment of Figure 1.
Figure 3 is a cross-sectional view of another embodiment of the present invention.
Figure 4 is a side view of one end of an apparatus according to an embodiment of the present invention.
Figure 5 is a side view of one end of an apparatus according to another embodiment of the present invention.

### Detailed Description of the Invention

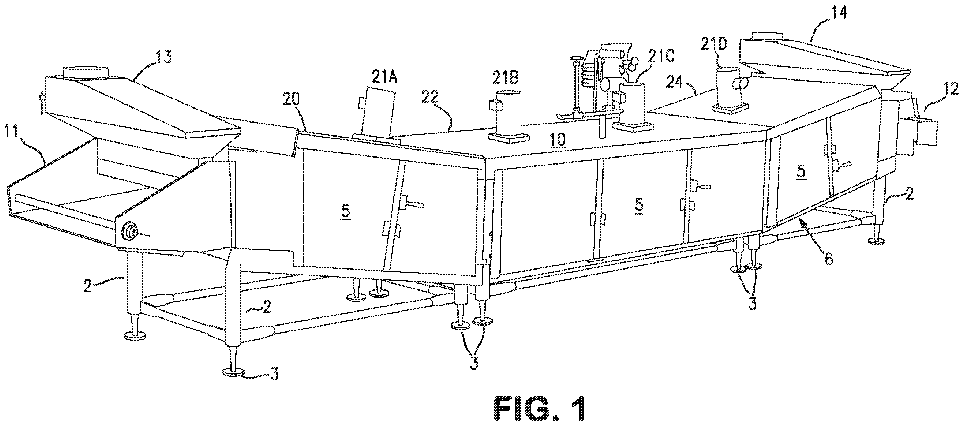

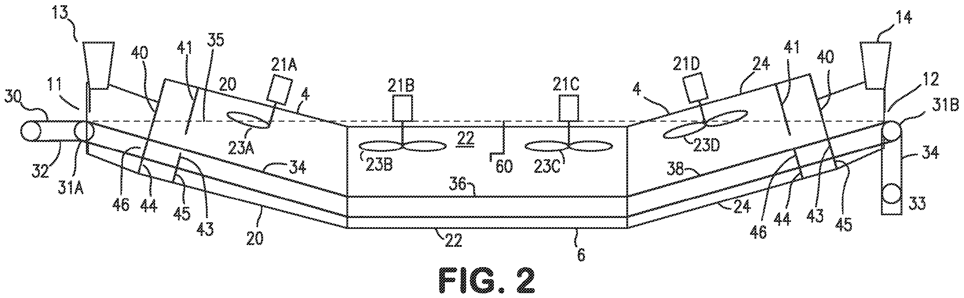

The invention can be carried out using apparatus having the general physical configuration shown in Figure 1. As seen in Figures 1 and 2, apparatus 1 includes housing 10 which is supported on legs 2 and feet 3, and which includes top 4, sides 5, bottom 6, and ends 11 and 12. For purposes of this description, end 11 will be considered to be the entrance for product entering the housing, and end 12 will be considered to be the exit from which product exits the housing. The apparatus can be constructed so that panels on one or both sides of the housing 10 can be removed, or can be swung upward or to the side on suitably placed hinges, to provide access to the interior for cleaning and maintenance.

Apparatus 1 also includes vents 13 and 14 for exhausting cryogen from the interior of apparatus 1. Apparatus 1 includes a section 20 which extends from entrance 11 in a generally downward sloping path, as well as a section 24 which extends in a generally upward sloping path to exit 12 and section 22 between sections 20 and 24. Section 22 is preferably relatively horizontal. However, in an alternative embodiment, section 22 may instead have a portion which extends downward from the closest end of section 20 and a portion which extends upward toward the closest end of section 24. Alternatively, section 22 can be omitted. Apparatus 1 further includes motors 21A, 21B, 21C and 21D which are connected to, and which drive, shafts of circulators which are shown in Figure 2.

Referring to Figure 2, a continuous belt 30 passes from entrance 11 through the housing 10 and emerges at exit 12. Examples of suitable belts include continuous conveyor belts, which are preferred. Belt 30 can be made of any suitable material, including metal or plastic, that can tolerate the cold conditions within the housing 10. Belt 30 can be solid (i.e. impervious to passage of vapor through the belt) or pervious (i.e. including holes, or made of interconnected links or slats, such that vapor can pass through the belt). Belt 30 is preferably driven by any device that can be turned on and off and that preferably permits control of the rate at which the belt moves. Examples of suitable devices are familiar in this field. One such device comprises a motor 33 and drive belt 34 which rotates axle 31B which in turn engages belt 30. Belt 30 is supported in any of various ways familiar in this field, such as on a series of flat slats (or on a series of rollers) which extend from one side to the other side of housing 10.

The opposed ends of belt 30 can be aligned with entrance 11 and exit 12, or one or both of the ends of belt 30 can protrude out of the housing 10 at entrance 11, exit 12, or both, as desired by the operator to facilitate loading and unloading product onto and off of the belt. Belt 30 is made of any material that can withstand the temperatures to which it is exposed within housing 10, and that can withstand having the heat transfer medium (e.g. a very cold material such as liquid nitrogen for cooling applications) applied directly onto the belt material. At least in those embodiments in which heat transfer medium is impinged toward the belt from above and below the belt surface, the belt 30 should preferably be constructed so that liquid and vapor can pass through it. One well-known example of such belt material comprises interlinked loops of metal mesh. Other examples are conventional and well-known in this field.

Belt 30 follows a path in which it crosses first point 31A and second point 31B. Points 31A and 31B are preferably located near entrance 11 and exit 12, respectively, and may be inside or outside the enclosure formed by housing 10. One or both of points 31A and 31B may conveniently be axles over which belt 30 passes and then reverses direction to form reverse pass 32, in the embodiments in which belt 30 is an endless conveyor. In Figure 2, point 31B represents such an axle. Alternately, one or both of points 31A and 31B may be an idler or other support structure over which belt 30 passes en route to an axle such as 32 shown in Figure 2, in which the belt 30 reverses direction after passing over axle 32. In Figure 2, point 31A is such an idler.

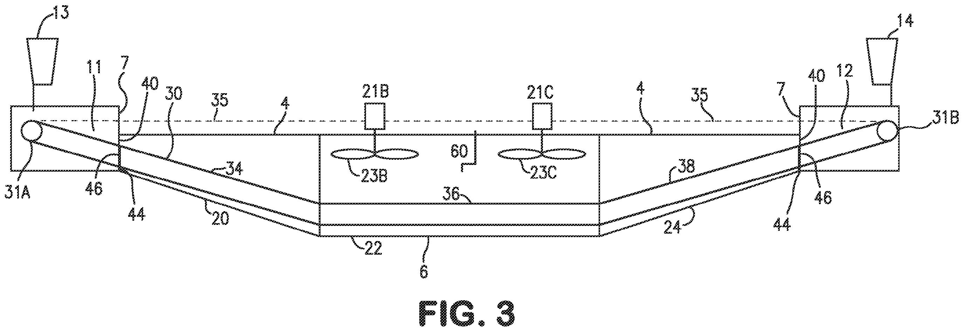

Belt 30 follows a path between first point 31A and second point 31B which includes at least one segment of belt 30 that is within the enclosure of housing 10, and that is lower than an imaginary horizontal line 35 (seen in e.g. Figure 2) that passes through the lower of the first and second points (31A and 31B). As used herein, "the lower of the first and second points" is considered to include either of points 31A and 31B where those points are on the same horizontal level, as shown in the embodiments illustrated in Figures 2 and 3. In other embodiments, in which points 31A and 31B are not on the same horizontal line, the imaginary horizontal line 35 discussed herein passes through the lower of points 31A and 31B. This horizontal line represents the top surface of the cryogen vapor pool that is formed and retained in the apparatus, as described herein.

The advantages of this characteristic are described further, below. In Figure 2, the segment of belt 30 that is below line 35 includes segments 34, 36 and 38. The apparatus of the present invention also includes structures located within the enclosure of housing 10, between the aforementioned first and second points, which extend from above imaginary line 35 to below that line and ending above the top surface of belt 30. These structures define a chilling zone within housing 10, and they impede entry of air into the chilling zone from the ambient atmosphere outside apparatus 1. Thus, these structures are preferably located relatively near to the entrance 11 and exit 12, to establish a chilling zone of satisfactory volume within housing 10. In the embodiment shown in Figure 2, these structures are shown as 40, 41, 42 and 43 and can be impervious plates of metal or plastic that are attached to the interior surface of the top of housing 10 and extend downward toward belt 30. They extend preferably fully from one side of housing 10 to the other side.

The structures can alternatively include part of the housing 10 itself. An example of this alternative is shown in Figure 3, in which the portions 50 and 52 of the structure are also part of the top of the housing itself, as they extend from above line 35 to below line 35. Portions 51 and 53 of the structure extend further toward belt 30, downward from the interior surface of the top of the housing. In any of these configurations, the lower ends of the structures are above the top surface of the belt, to permit product being chilled or frozen to pass through the enclosure without being blocked by the structures.

The apparatus of the present invention also includes third, fourth, and preferably fifth and sixth structures that are located within the housing 10, between the aforementioned first and second points (i.e. points 31A and 31B of Figure 2). The third and fourth structures are shown as 44 and 45 in Figure 2 and extend from the bottom of the housing 10 to below the return run 32 of the belt. The fifth and sixth structures extend from a point above the return run to a point below belt 30. The third, fourth, fifth and sixth structures can be impervious plates of metal or plastic and preferably extend fully from one side of housing 10 to the other side. These structures help retain cryogen vapor within the chilling zone and help impede entry of air from outside the apparatus.

Apparatus 1 also includes at least one outlet 60 to introduce cryogen into the enclosure. Preferred cryogens include liquid nitrogen, liquid carbon dioxide, and solid carbon dioxide (preferably introduced as carbon dioxide "snow"). Outlet 60 is connected by suitable piping and controls to a source outside apparatus 1 which contains the cryogen and which enables controllable flow of the cryogen from the source into the enclosure.

Apparatus 1 also preferably includes one or more circulators or fans within the enclosure. These are shown in Figure 2 as 23A, 23B, 23C and 23D, which are driven by the aforementioned motors 21A through 21D, respectively. Each circulator establishes flow of cryogen vapor within the enclosure to improve the heat transfer between the products being chilled or frozen, and the cryogen vapor.

Figure 3 illustrates another embodiment of apparatus of the present invention, in which reference numerals that appear in Figure 3 and also appear in Figure 1 and/or Figure 2 have the meanings given with respect to Figures 1 and 2 as the case may be. Figure 3 illustrates that the imaginary line 35 may be outside the portion of housing 10 which lies between first and second points 31A and 31B.

Exhaust ports 13 and 14 may include an exhaust fan, and may include a duct which contains an adjustable damper by which the amount of cryogen vapor that leaves the housing 10 can be adjusted, and appropriate controls to enable adjustment of the amount of cryogen vapor that is picked-up from the exhaust area by adjustment of the speed of the exhaust fan, the position of the damper, or both, so as to achieve the desired amount of cryogen exhaust, and the amount of ambient air that is also drawn through each exhaust port.

In the preferred mode of operating, belt 30 moves in a direction such that product that is placed on belt 30 at entrance 11 enters housing 10 and leaves housing 10 at exit 12. Cryogen is injected through outlet 60 (or through each outlet 60 if more than one outlet 60 is provided) toward the upper surface of belt 30 and toward the product thereon. With the circulators and exhaust vents operating, cryogen vapor that is formed by vaporization of the injected cryogen fills the chilling zone which is in the space bounded by the bottom and sides of housing 10, by the first and second structures described above, and by either the top of housing 10 or the imaginary line 35, whichever is lower.

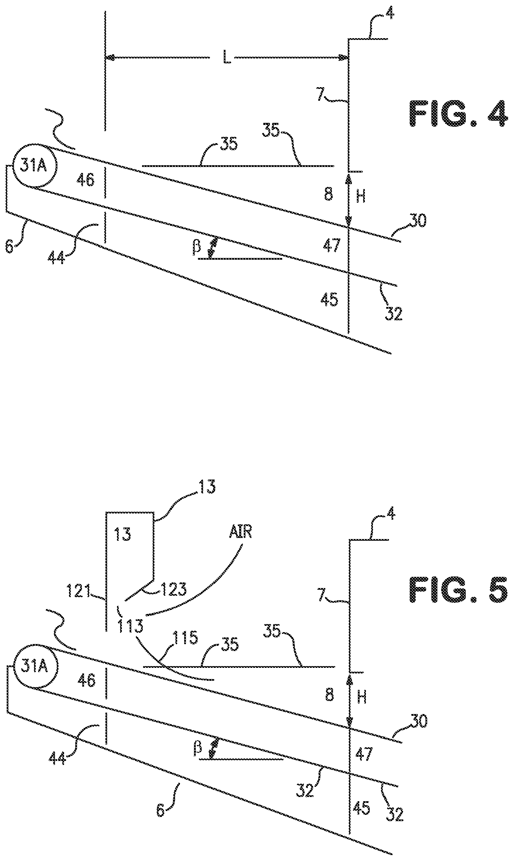

The present invention minimizes air infiltration by angling the belt 30 in the regions near entrance 11 and exit 12 as shown in the Figures, as opposed to a path of travel that is essentially horizontal. The present invention effectively closes off the path of air from outside the apparatus into the housing 10 by forming a cryogenic vapor pool that extends above the upper edge of the openings at entrance 11 and exit 12. In Figures 4 and 5, the opening at entrance 11 is shown as 8 which extends from the bottom edge of front 7 of the housing 10, to the top surface of belt 30. A corresponding opening exists at exit 12. The extent of the cryogen vapor pool effective to keep air from having a path through opening 8 between the exterior and the interior of apparatus 10 depends on the height **H** of opening 8 between belt 30 and front 7, and on the angle β (the slope) of belt 30 as shown in Figures 4 and 5. As **H** increases, for a given value of **L** (where **L** is the distance between front wall 7 and the outermost structures 44 and 46, the angle β necessarily also increases in order that the top surface of the cryogen vapor pool remains above the top of opening 8.

For practical reasons, β angles of 5° to 20°, preferably near 10°, are useful relative to height clearances at opening 8 as well as for enabling product to travel well on a typical conveyor belt. Excessively steep angles or large β values would risk having the product slide on the belt surface, thus requiring additional equipment or features on the belt's upper surface to hold the product along the belt. Depending on the placement of the outermost structures 44 and 46 between the belt and outside the freezer cooling zone, the height of opening 8 can be determined based on angle β. In Figure 4, the outermost structure is a distance **L** from the front wall 7. For this case,

$$H = L \tan \beta$$

When the equation above is not satisfied and **H** is larger than (L*tan β), air can enter into the enclosure which reduces the efficiency of the apparatus because some of the cooling value of the cryogen that is fed into the apparatus is consumed in cooling the air that has entered. The value of **H** does not exceed 1.5 times (L*tan β), to realize the benefits of the invention.

Figure 5 also illustrates exhaust vent 13 in a preferred configuration. One advantageous feature of this embodiment is locating the inlet 113 of vent 13 outside the housing 10 to allow cryogen vapor to be drawn into vent 13 from the top surface 115 of the cryogen vapor pool that is located outside apparatus 10. This avoids having to pull cryogen vapor from the chilling zone inside the apparatus 10.

Another advantageous feature is that at the bottom of vent 13, one side 121 is longer than the opposing side 123. The difference in length has been found to change the pickup velocity along the conveyor belt surface. With this design the practical function is that for the same energy input, vapor at the conveyor belt surface enters the exhaust system rather than slipping by the exhaust pickup. The longer edge can be located on either side of the vent, but preferably the shorter side 123 at the base of the vent 13 is on the side closer to apparatus 10 to preferentially collect air along with the cryogen vapor being collected.

In representative operation, apparatus embodying this invention is generally at least about 1.83 m (6 feet) in length. There is no absolute maximum length for successful operation; rather, the length is typically set by the desired dwell time of product passing through the enclosure and by the available space in which the apparatus would be operated. Typically, suitable apparatus is 6.1 m to 15.2 m (20 to 50 feet) long. The number of circulators to employ depends mainly on the length of the apparatus. The circulation fans should be spaced about 0.91 m to 1.52 (3 to 5 feet) apart. Preferably, baffles can be provided between adjacent circulators to improve the circulation of cryogen vapor and/or minimize air infiltration into the enclosure.

The apparatus and methods described herein greatly lessen the amount of ambient air that enters into the chilling zone.

## Claims

1. Apparatus (1) for chilling or freezing a product, comprising:

   (A) an elongated enclosure (10) having an entrance (11) and an exit (12);
   (B) a movable belt (30) that can carry product to be chilled or frozen on the top surface of the belt within the enclosure (10) between the entrance (11) and the exit (12), the belt (30) comprising an upper run and a return run (32) below the upper run, and the enclosure (10) including a first section (20) which extends from the entrance (11) in a generally downward sloping path, and a second section (24) which extends in a generally upward sloping path to the exit (12), wherein the top surface of the belt lies on a path that crosses first and second points (31A, 31B) and that includes a segment (34, 36, 38) within the enclosure that is between the first and second points and that is lower than an imaginary horizontal line (35) passing through the lower of the first and second points, and wherein the belt does not pass through any container of cryogenic liquid;
   (C) wherein the enclosure (10) includes first and second structures (40, 41) located within the enclosure between the first and second points (31A, 31B), each structure extending from above the imaginary line (35) to below said line and above the top surface of the belt (30), the first and second structures impeding entry of air from the ambient atmosphere into the enclosure and, together with the top (4), bottom (6) and sides (5) of the enclosure, defining a chilling zone;
   (D) the enclosure (10) further including third and fourth structures (44, 45) located within the enclosure between the first and second points (31A, 31B), each structure extending from the bottom of the enclosure (10) to below a return run (32) of the belt (30), the third and fourth structures impeding entry of air from the ambient atmosphere into the enclosure and retaining cryogen vapor within the chilling zone;
   (E) at least one outlet (60) within the enclosure (10) that is connected to a source of liquid cryogenic refrigerant and is capable of dispensing said cryogenic refrigerant into the chilling zone; and
   a vent (13, 14) at one or each of the entrance (11) and the exit (12), located above said imaginary line (35), through which cold vapor from within the enclosure (10) together with air from outside the enclosure can pass into an inlet (113) of said vent, and further comprising a curtain (121) extending toward said line (35) from a location on said vent that is between the vent and the ambient atmosphere;
   wherein the height H of the entrance (11) above the top surface of the belt is determined by the formula:

$$H \leq 1.5 * L * \tan \beta$$

   wherein:

   H is the height of the entrance (11) above the top surface of the belt,
   β is the angle of the slope of the belt (30) at the entrance, and
   L is the distance of the outermost of the third and fourth structures (44, 45).

2. Apparatus according to claim 1 and further comprising at least one circulator (23A, 23B, 23C, 23D) within the chilling zone.

3. Apparatus according to claim 1 further comprising fifth and sixth structures located within the enclosure between the first and second points, each extending from a point above the return run to a point below the upper run.

4. A method of chilling or freezing a product comprising conveying the product through an apparatus according to any one of the preceding claims; and injecting cryogen refrigerant within said chilling zone.

5. The method of claim 4 further comprising exhausting cold vapor from said enclosure (10) through a vent (13, 14) at one or each of the entrance (11) and the exit (12), located above said imaginary line (35), through which cold vapor can be exhausted from within the enclosure into an inlet (113) of said vent.

6. The method of claim 4, wherein said imaginary line (35) is drawn between the first and second points (31A, 31B), and wherein by injecting said cryogen refrigerant within said chilling or freezing zone a pool of cold vapor is established through which said product is conveyed.

7. The method of claim 6 further comprising exhausting cold vapor from within said enclosure (10) together with air from outside said enclosure through a vent (13, 14) at one or each of the entrance (11) and the exit (12).

## Patentansprüche

1. Vorrichtung (1) zum Kühlen oder Einfrieren eines Produkts, umfassend:

(A) ein längliches Gehäuse (10) mit einem Eingang (11) und einem Ausgang (12);

(B) ein bewegliches Band (30), das auf der oberen Oberfläche des Bandes innerhalb des Gehäuses (10) zwischen dem Eingang (11) und dem Ausgang (12) ein zu kühlendes oder einzufrierendes Produkt transportieren kann, wobei das Band (30) einen Oberlauf und einen Rücklauf (32) unterhalb des Oberlaufs umfasst, und das Gehäuse (10) einen ersten Abschnitt (20) einschließt, der sich vom Eingang (11) in einem im Allgemeinen abwärts geneigten Weg erstreckt, und einen zweiten Abschnitt (24), der sich in einem im Allgemeinen aufwärts geneigten Weg zum Ausgang (12) erstreckt, wobei die obere Oberfläche des Bandes auf einem Weg liegt, der den ersten und zweiten Punkt (31A, 31B) kreuzt und der ein Segment (34, 36, 38) innerhalb des Gehäuses einschließt, das sich zwischen dem ersten und dem zweiten Punkt befindet und das niedriger als eine imaginäre horizontale Linie (35) liegt, die durch den niedrigeren des ersten und zweiten Punktes verläuft, und wobei das Band nicht durch einen Behälter mit kryogener Flüssigkeit verläuft;

(C) wobei das Gehäuse (10) erste und zweite Strukturen (40, 41) einschließt, die innerhalb des Gehäuses zwischen den ersten und zweiten Punkten (31A, 31B) angeordnet sind, wobei sich jede Struktur von oberhalb der imaginären Linie (35) nach unterhalb der Linie und oberhalb der oberen Oberfläche des Bandes (30) erstreckt, wobei die ersten und zweiten Strukturen den Eintritt von Luft aus der Umgebungsatmosphäre in das Gehäuse behindern und zusammen mit der Oberseite (4), der Unterseite (6) und den Seiten (5) des Gehäuses eine Kühlzone definieren;

(D) wobei das Gehäuse (10) ferner dritte und vierte Strukturen (44, 45) einschließt, die innerhalb des Gehäuses zwischen den ersten und zweiten Punkten (31A, 31B) angeordnet sind, wobei sich jede Struktur von der Unterseite des Gehäuses (10) bis unterhalb eines Rücklaufs (32) des Bandes (30) erstreckt, wobei die dritten und vierten Strukturen den Eintritt von Luft aus der Umgebungsatmosphäre in das Gehäuse behindern und kryogenen Dampf innerhalb der Kühlzone halten;

(E) mindestens einen Auslass (60) innerhalb des Gehäuses (10), der mit einer Quelle für flüssiges kryogenes Kältemittel verbunden ist und das kryogene Kältemittel in die Kühlzone abgeben kann; und

eine Entlüftung (13, 14) an einem oder jedem von Eingang (11) und Ausgang (12), die sich oberhalb der imaginären Linie (35) befinden, durch die kalter Dampf aus dem Inneren des Gehäuses (10) zusammen mit Luft von außerhalb des Gehäuses in einen Einlass (113) der Entlüftung gelangen kann, und ferner umfassend einen Vorhang (121), der sich in Richtung der Linie (35) von einer Stelle an der Entlüftung erstreckt, die sich zwischen der Entlüftung und der Umgebungsatmosphäre befindet;

wobei die Höhe **H** des Eingangs (11) oberhalb der oberen Oberfläche des Bandes durch die folgende Formel ermittelt wird:

$$ H \leq 1{,}5 * L * \tan \beta $$

wobei:

> **H** die Höhe des Eingangs (11) oberhalb der oberen Oberfläche des Bandes ist,
> β der Neigungswinkel des Bandes (30) am Eingang ist und
> **L** der Abstand der äußersten der dritten und vierten Struktur (44, 45) ist.

2. Vorrichtung nach Anspruch 1 und ferner umfassend mindestens einen Zirkulator (23A, 23B, 23C, 23D) innerhalb der Kühlzone.

3. Vorrichtung nach Anspruch 1, ferner umfassend fünfte und sechste Strukturen, die innerhalb des Gehäuses zwischen den ersten und zweiten Punkten angeordnet sind, wobei sich jede von einem Punkt oberhalb des Rücklaufs zu einem Punkt unterhalb des Oberlaufs erstreckt.

4. Verfahren zum Kühlen oder Einfrieren eines Produkts, umfassend das Fördern des Produkts durch eine Vorrichtung gemäß einem der vorstehenden Ansprüche; und Einspritzen von kryogenem Kältemittel innerhalb der Kühlzone.

5. Verfahren nach Anspruch 4, ferner umfassend das Abgeben von kaltem Dampf aus dem Gehäuse (10) durch eine Entlüftung (13, 14) an einem oder jedem des Eingangs (11) und des Ausgangs (12), die sich oberhalb der imaginären Linie (35) befinden, durch die kalter Dampf aus dem Inneren des Gehäuses in einen Eingang (113) der Entlüftung abgegeben werden kann.

6. Verfahren nach Anspruch 4, wobei die imaginäre Linie (35) zwischen dem ersten und dem zweiten Punkt (31A, 31B) gezogen wird und wobei durch Einspritzen des kryogenen Kältemittels innerhalb der Kühl- oder Einfrierzone ein Pool aus kaltem Dampf gebildet wird, durch den das Produkt befördert wird.

7. Verfahren nach Anspruch 6, ferner umfassend das Abgeben von kaltem Dampf aus dem Inneren des Gehäuses (10) zusammen mit Luft von außerhalb des Gehäuses durch eine Entlüftung (13, 14) an einem oder jedem von Eingang (11) und Ausgang (12).

## Revendications

1. Appareil (1) de refroidissement ou de congélation d'un produit, comprenant :

   (A) une enceinte allongée (10) ayant une entrée (11) et une sortie (12) ;
   (B) une courroie mobile (30) qui peut transporter un produit à refroidir ou à congeler sur la surface supérieure de la courroie à l'intérieur de l'enceinte (10) entre l'entrée (11) et la sortie (12), la courroie (30) comprenant une course supérieure et une course de retour (32) sous la course supérieure, et l'enceinte (10) incluant une première section (20) qui s'étend à partir de l'entrée (11) selon une trajectoire généralement inclinée vers le bas, et une deuxième section (24) qui s'étend selon une trajectoire généralement inclinée vers le haut jusqu'à la sortie (12), dans lequel la surface supérieure de la courroie se trouve sur une trajectoire qui traverse des premier et deuxième points (31A, 31B) et qui inclut un segment (34, 36, 38) qui est à l'intérieur de l'enceinte entre les premier et deuxième points et qui est plus bas qu'une ligne imaginaire horizontale (35) passant à travers le plus bas des premier et deuxième points, et dans lequel la courroie ne passe à travers aucun récipient de liquide cryogénique ;
   (C) dans lequel l'enceinte (10) inclut des première et deuxième structures (40, 41) situées à l'intérieur de l'enceinte entre les premier et deuxième points (31A, 31B), chaque structure s'étendant depuis le dessus de la ligne imaginaire (35) jusqu'au dessous de celle-ci et au-dessus de la surface supérieure de la courroie (30), les première et deuxième structures empêchant l'entrée d'air de l'atmosphère ambiante dans l'enceinte, et définissant une zone de refroidissement en association avec le sommet (4), le fond (6) et les côtés (5) de l'enceinte ;
   (D) l'enceinte (10) comprenant en outre des troisième et quatrième structures (44, 45) situées à l'intérieur de l'enceinte entre les premier et deuxième points (31A, 31B), chaque structure s'étendant à partir du fond de l'enceinte (10) jusqu'en dessous d'une course de retour (32) de la courroie (30), les troisième et quatrième structures empêchant l'entrée d'air de l'atmosphère ambiante dans l'enceinte et retenant la vapeur cryogénique au sein de la zone de refroidissement ;
   (E) au moins une sortie (60) à l'intérieur de l'enceinte (10) qui est reliée à une source de réfrigérant cryogénique liquide et est capable de distribuer ledit réfrigérant cryogénique dans la zone de refroidissement ; et
   un évent (13, 14) au niveau de l'une ou de chacune de l'entrée (11) et de la sortie (12), situé au-dessus de ladite ligne imaginaire (35), à travers lequel de la vapeur froide provenant de l'intérieur de l'enceinte (10) conjointement avec de l'air venant de l'extérieur de l'enceinte peut passer dans une entrée (113) dudit évent, et comprenant en outre un rideau (121) s'étendant vers ladite ligne (35) à partir d'un emplacement sur ledit évent qui se situe entre l'évent et l'atmosphère ambiante ;
   dans lequel la hauteur **H** de l'entrée (11) au-dessus de la surface supérieure de la courroie est déterminée par la formule :

$$H \leq 1{,}5 * L * \tan \beta$$

   dans laquelle :

   **H** est la hauteur de l'entrée (11) au-dessus de la surface supérieure de la courroie,
   $\beta$ est l'angle de la pente de la courroie (30) à l'entrée, et
   **L** est la distance de la plus à l'extérieur parmi les troisième et quatrième structures (44, 45).

2. Appareil selon la revendication 1 et comprenant en outre au moins un circulateur (23A, 23B, 23C, 23D) à l'intérieur de la zone de refroidissement.

3. Appareil selon la revendication 1, comprenant en outre des cinquième et sixième structures situées au sein de l'enceinte entre les premier et deuxième points, s'étendant chacune d'un point au-dessus de la course de retour à un point en dessous de la course supérieure.

4. Procédé de refroidissement ou de congélation d'un produit, comprenant le transport du produit à travers un appareil selon l'une quelconque des revendications précédentes ; et l'injection d'un réfrigérant cryogénique à l'intérieur de ladite zone de refroidissement.

5. Procédé selon la revendication 4, comprenant en outre l'évacuation de vapeur froide de ladite enceinte (10) à travers un évent (13, 14) au niveau d'une ou de chacune de l'entrée (11) et de la sortie (12), située au-dessus de ladite ligne imaginaire (35), à travers laquelle de la vapeur froide peut être évacuée de l'intérieur de l'enceinte dans une entrée (113) dudit évent.

**6.** Procédé selon la revendication 4, dans lequel ladite ligne imaginaire (35) est tracée entre les premier et deuxième points (31A, 31B), et dans lequel, en injectant ledit réfrigérant cryogénique à l'intérieur de ladite zone de refroidissement ou de congélation, un bain de vapeur froide est créé, à travers lequel ledit produit est transporté.

**7.** Procédé selon la revendication 6, comprenant en outre l'évacuation de vapeur froide de l'intérieur de ladite enceinte (10) conjointement avec de l'air provenant de l'extérieur de ladite enceinte à travers un évent (13, 14) au niveau d'une ou de chacune de l'entrée (11) et de la sortie (12).

FIG. 1

EP 3 094 933 B1

**FIG. 2**

EP 3 094 933 B1

**FIG. 3**

EP 3 094 933 B1

FIG. 4

FIG. 5

**EP 3 094 933 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5875681 A
- US 4350027 A
- US 5715688 A